# EUROPEAN PATENT APPLICATION

(11) **EP 4 545 601 A1**
(43) Date of publication of application: **30.04.2025**
(21) Application number: 23827078.9
(22) Date of filing: 14.06.2023
(51) Int. Cl.: C08L 83/07, C08F 4/42, C08K 3/013, C08K 3/08, C08K 3/10, C08K 13/02, C08L 83/08

(54) **CURABLE SILICONE COMPOSITION AND METHOD FOR PRODUCING SAME AND METHOD FOR CURING SAME, SILICONE CURED PRODUCT AND METHOD FOR PRODUCING SAME, AND [2+2+2] CYCLOADDITION REACTION PRODUCT AND METHOD FOR PRODUCING SAME**

(30) Priority: 23.06.2022 JP 2022101013
(71) Applicant: SHIN-ETSU CHEMICAL CO., LTD., Tokyo 1000005 (JP)
(72) Inventor: KITAZAWA Keita, Annaka-shi, Gunma 379-0224 (JP)
(74) Representative: Sonnenhauser, Thomas Martin
(86) International application number: PCT/JP2023/022081
(87) International publication number: WO 2023/248892

(57) **Abstract**

The present invention is a curable silicone composition including: (A) 100 parts by mass of an organopolysiloxane having one or more alkynyl groups or nitrile groups in one molecule; and (B) an effective amount of a transition metal compound, a typical metal compound, or a combination thereof that is capable of catalyzing a [2+2+2] cycloaddition reaction. This can provide a curable silicone composition that does not require special temperature control during storage or transportation, thereby enabling reduction of the environmental load, and is less susceptible to substances that cause curing inhibition of publicly known conventional addition-curable silicone compositions.

## Description

### TECHNICAL FIELD

The present invention relates to a curable silicone composition, a silicone cured product, a method for manufacturing the curable silicone composition, a method for manufacturing the silicone cured product, a method for curing the curable silicone composition, a [2+2+2] cycloaddition reaction product, and a method for manufacturing the [2+2+2] cycloaddition reaction product.

### BACKGROUND ART

Curable silicone composition cures to form silicone gels, silicone rubbers, hard coat films, etc., which are excellent in electrical properties, cold resistance, heat resistance, and chemical stability. Therefore, they can be widely used as a sealing material for electrical and electronic parts and semiconductor elements, a filler or a coating material, a protective insulating and coating material for optical semiconductor, etc. Further, by blending various fillers, it is possible to increase strength of the composition and impart heat resistance. Furthermore, it is used as a heat dissipation material and a conductive material for semiconductor elements and electronic components such as LED substrates. In recent years, with the growing momentum for carbon neutrality, there is a need for curable silicone compositions that can reduce environmental load by not requiring special temperature control during storage or transportation.

Curing forms of the curable silicone compositions can be roughly classified into three types: "addition-curable", "condensation-curable" and "peroxide-curable." Addition-curable silicone compositions generally have poor storage stability at room temperature and requires to be refrigerated or frozen for storage and transportation. Although a two-pack curing type in which the catalyst component and the crosslinking agent component are separated enables storage and transportation at room temperature, it is essential to introduce a device to uniformly mix the two components with good quantitative accuracy. In addition, by using a UV-active catalyst instead of a normal temperature-responsive catalyst as the catalyst component, it is possible to store and transport at room temperature under light-shielded conditions, but in order to cure the composition, it is essential to introduce a device for UV irradiation. In addition, regardless of one-pack or two-pack curing type, and temperature-responsive or UV-active catalyst metal, the catalyst component may be deactivated by amine compounds, etc. contained in cutting oil or epoxy molding materials, resulting in poor curing.

Because condensation-curable silicone compositions are cured by moisture in the air, they can be stored and transported at room temperature when moisture is blocked. However, they cannot be said to be preferable from the viewpoint of environmental load because they produce a separated component with a low boiling point in a curing reaction. Furthermore, due to the curing system that uses moisture in the air to cure, they have a problem of poor deep-part curability.

Peroxide-curable silicone compositions can be stored and transported at room temperature by selecting an appropriate peroxide catalyst, but they have a problem of curing inhibition by oxygen in the air.

When taking curability and handling properties into consideration, a one-pack curable silicone composition is judged to be the most suitable, but as mentioned above, it is difficult to be stored and transported at room temperature. A measure to improve the storage stability at room temperature of one-pack addition curable silicone compositions is to incorporate an appropriate amount of an addition-curing reaction-controlling agent such as acetylene alcohol for example (Patent Document 1). However, when these addition-curing reaction-controlling agents are blended to an extent that allows storage and transportation at room temperature, the curing reaction does not proceed sufficiently in the subsequent curing process of addition-curable silicone composition, resulting in a problem of causing poor curing.

As another measure, for example, a microcapsule structure in which a catalyst component is embedded in a polymer compound is considered to be effective (for example, Patent Documents 2 and 3). However, the catalyst component embedded inside the microcapsule structure has a slow diffusion rate into a composition and is difficult to initiate an addition-curing reaction, so the curing reaction may not proceed sufficiently also in the curing process and may cause poor curing.

Addition-curable silicone compositions may contain a compound having a carbon-carbon triple bond as a curing retarder (a reaction-control agent). The curing retarder not only controls the reaction rate of an addition reaction (hydrosilylation) to lengthen the pot life of the addition-curable silicone composition but also has the function of preventing silicone compositions from beginning to cure partly in operating due to too high curing rate of the silicone composition. On the other hand, in Patent Document 4, a substituted polyacetylene compound is obtained rather by polymerizing an organosilicon compound having a carbon-carbon triple bond in the presence of a catalyst. A compound having a carbon-carbon triple bond can be polymerized to give a linear polymer as described above and also a hyperbranched polymer that is a polymer having a multibranched structure by a cycloaddition reaction (Patent Documents 5, 6). Furthermore, Non-Patent Document 1 describes that an alkyne and a nitrile undergo a [2+2+2] cycloaddition reaction to give a cyclic compound such as pyridine.

### CITATION LIST

### PATENT LITERATURE

Patent Document 1: JP H4-46962 A
Patent Document 2: JP H11-236508 A
Patent Document 3: JP 2014-024986 A
Patent Document 4: JP S61-268745 A
Patent Document 5: US 2003/225232 A1
Patent Document 6: JP 2019-206676 A

### NON PATENT LITERATURE

Non Patent Document 1: Chem. Rev. 2003, 103, 3787-3801

### SUMMARY OF INVENTION

### TECHNICAL PROBLEM

As described above, various studies have been conducted on the curing of curable silicone compositions, and further improvements are required from the viewpoints of reducing the environmental load and workability. Considering the curability and handleability, one-pack curable silicone compositions are suitable. Still, even so, they do not achieve both storage stability at room temperature and a good curing reaction.

That is, conventional addition-curable silicone compositions have problems in that it is difficult to reduce the environmental load because they require temperature control, and they are easily affected by curing inhibitors such as amine compounds contained in cutting oils, epoxy molding materials, etc.

Furthermore, compounds having a carbon-carbon triple bond undergo an addition reaction to form a polymer, but a [2+2+2] cycloaddition reaction of organopolysiloxanes having the triple bond has not been known so far.

Therefore, the present invention has been made in view of the above-described problems. An object of the present invention is to provide a curable silicone composition that does not require special temperature control during storage or transportation, thereby enabling reduction of the environmental load, and is less susceptible to substances that cause curing inhibition of publicly known conventional addition-curable silicone compositions.

Another object of the present invention is to provide a [2+2+2] cycloaddition reaction product of an organopolysiloxane having one or more alkynyl groups or nitrile groups in one molecule as a novel substance, and a method for manufacturing the same.

### SOLUTION TO PROBLEM

To solve the above problem, the present invention provides a curable silicone composition comprising:
(A) 100 parts by mass of an organopolysiloxane having one or more alkynyl groups or nitrile groups in one molecule; and
(B) an effective amount of a transition metal compound, a typical metal compound, or a combination thereof that is capable of catalyzing a [2+2+2] cycloaddition reaction.

Such a curable silicone composition does not require special temperature control during storage or transportation, thereby reducing the environmental load, and is less susceptible to substances that cause curing inhibition of publicly known conventional addition-curable silicone compositions.

In the present invention, the component (A) is preferably an organopolysiloxane having a kinematic viscosity at 25°C of 1 to 20,000,000 mm²/s.

When the kinematic viscosity at 25°C is 1 mm²/s or more, the curable silicone composition has good physical properties. When the kinematic viscosity at 25°C is 20,000,000 mm²/s or less, the curable silicone composition has sufficient spreadability.

In the present invention, the component (A) is preferably an organopolysiloxane having one or more alkynyl groups in one molecule, and more preferably an organopolysiloxane having one or more ethynyl groups in one molecule.

As the component (A), such an organopolysiloxane is suitable.

In the present invention, the component (B) is preferable a transition metal complex capable of catalyzing a [2+2+2] cycloaddition reaction.

As the component (B), such a transition metal complex is suitable as a catalyst for a [2+2+2] cycloaddition reaction.

In the present invention, the curable silicone composition preferably further comprises 0.1 to 5,000 parts by mass of (C) one or more inorganic or organic fillers relative to 100 parts by mass of the component (A) .

Such a component (C) can impart various properties such as thermal conductivity, heat resistance, reinforcing properties, electrical conductivity, and design properties to the curable silicone composition of the present invention, and as long as the blending amount is within the above range, the viscosity is not too high, making it easy to handle and resulting in a homogeneous composition.

In this event, the component (C) is preferably a filler comprising one or more materials selected from the group consisting of metals, metal oxides, metal hydroxides, metal nitrides, metal carbides, carbon allotropes, resins, dyes, and pigments.

By selecting such a material and using it as a filler, it is possible to impart properties such as thermal conductivity, heat resistance, reinforcing properties, electrical conductivity, smoothness, and design properties to the composition.

Further, the present invention provides a silicone cured product of the curable silicone composition above.

The inventive silicone cured product is excellent in electrical properties, cold resistance, heat resistance, and chemical stability, and widely used in the form of silicone gel, silicone rubber, hard coat film, etc. as a sealing material for electrical and electronic parts and semiconductor elements, a filler or a coating material, a protective insulating and coating material for an optical semiconductor, etc. Further, by containing a various filler, it is possible to increase strength and impart heat resistance. Further, it is also used as a heat dissipation material or a conductive material for semiconductor elements and electronic parts such as LED substrates.

Further, the present invention provides a method for manufacturing a curable silicone composition comprising a step of mixing
(A) 100 parts by mass of an organopolysiloxane having one or more alkynyl groups or nitrile groups in one molecule; and
(B) an effective amount of a transition metal compound, a typical metal compound, or a combination thereof that is capable of catalyzing a [2+2+2] cycloaddition reaction.

The inventive method for manufacturing the curable silicone composition makes it possible to efficiently manufacture the curable silicone composition.

Further, the present invention provides a method for manufacturing a silicone cured product comprising a step of mixing
(A) 100 parts by mass of an organopolysiloxane having one or more alkynyl groups or nitrile groups in one molecule; and
(B) an effective amount of a transition metal compound, a typical metal compound, or a combination thereof that is capable of catalyzing a [2+2+2] cycloaddition reaction,
and a step of curing an obtained mixture.

Further, the present invention provides a method for curing a curable silicone composition comprising a step of curing a mixture of
(A) an organopolysiloxane having one or more alkynyl groups or nitrile groups in one molecule; and
(B) an effective amount of a transition metal compound, a typical metal compound, or a combination thereof that is capable of catalyzing a [2+2+2] cycloaddition reaction.

In this way, the curable silicone composition can be cured appropriately, and a silicone cured product can be manufactured efficiently.

Further, the present invention provides a [2+2+2] cycloaddition reaction product of an organopolysiloxane having one or more alkynyl groups or nitrile groups in one molecule.

The inventive [2+2+2] cycloaddition reaction product does not require special temperature control during storage or transportation, making it possible to reduce the environmental load, and is also less susceptible to substances that cause curing inhibition, making it excellent as a main component of a curable silicone composition.

Further, the present invention provides a method for manufacturing a [2+2+2] cycloaddition reaction product comprising:
a step of performing a [2+2+2] cycloaddition reaction of the component (A) an organopolysiloxane having one or more alkynyl groups or nitrile groups in one molecule with the component (B) a transition metal compound, a typical metal compound, or a combination thereof that is capable of catalyzing a [2+2+2] cycloaddition reaction; and
a step of obtaining a reaction product.

The inventive method for manufacturing a [2+2+2] cycloaddition reaction product makes it possible to efficiently manufacture a [2+2+2] cycloaddition reaction product from an organopolysiloxane having an alkynyl group or a nitrile group.

### ADVANTAGEOUS EFFECTS OF INVENTION

The inventive curable silicone composition utilizes an organopolysiloxane having one or more alkynyl groups or nitrile groups in one molecule, and a transition metal compound, a typical metal compound, or a combination of thereof that is capable of catalyzing a [2+2+2] cycloaddition reaction. This makes the composition to be stored and transported at room temperature and less susceptible to substances that cause curing inhibition of publicly known conventional addition-curable silicone compositions. As a result, no special temperature control is required during storage or transportation, making it possible to reduce the environmental load, and even if a substance that causes curing inhibition of publicly known conventional addition-curable silicone compositions is present, the curing reaction is not inhibited in the present invention. Therefore, the inventive curable silicone composition can be applied to parts in which cutting oils and epoxy molding materials that contain curing inhibition substances such as amine compounds are used.

### DESCRIPTION OF EMBODIMENTS

As described above, it has been desired to develop an addition-curable silicone composition that does not require special temperature control during storage or transportation and is less susceptible to substances that cause curing inhibition of conventional addition-curable silicone compositions.

As a result of the diligent study of the above problems, the inventor found that by combining an organopolysiloxane having one or more alkynyl groups or nitrile groups in one molecule and a catalyst active in a [2+2+2] cycloaddition reaction, the organopolysiloxane can be cured even in the presence of a substance that causes curing inhibition of conventional addition-curable silicone compositions, and that no special temperature control is required during storage or transportation, and have completed the present invention.

Specifically, the present invention is a curable silicone composition comprising:
(A) 100 parts by mass of an organopolysiloxane having one or more alkynyl groups or nitrile groups in one molecule; and
(B) an effective amount of a transition metal compound, a typical metal compound, or a combination thereof that is capable of catalyzing a [2+2+2] cycloaddition reaction.

Hereinafter, the present invention will be specifically described, but the present invention is not limited thereto.

The present invention relates to a curable silicone composition, particularly to a curable silicone composition that can be stored and transported at room temperature and is less susceptible to substances that cause curing inhibition of publicly known conventional addition-curable silicone compositions.

### [Curable Silicone Composition]

The inventive curable silicone composition is characterized by including (A) 100 parts by mass of an organopolysiloxane having one or more alkynyl groups or nitrile groups in one molecule and (B) an effective amount of a transition metal compound, a typical metal compound, or a combination thereof that is capable of catalyzing a [2+2+2] cycloaddition reaction. The curable silicone composition includes the components (A) and (B), and may further include other components such as a component (C) (an inorganic filler or an organic filler) or other components for adjusting the strength or viscosity of the composition, as necessary as described below.

In the present invention, the organopolysiloxanes having alkynyl groups or nitrile groups undergo a catalytic [2+2+2] cycloaddition reaction.

The [2+2+2] cycloaddition here is, for example in case of a carbon-carbon triple bond, a reaction in which three carbon-carbon triple bonds are cyclized to form a six-membered ring as shown below to form a benzene skeleton. In the following formula, R represents an organic group.

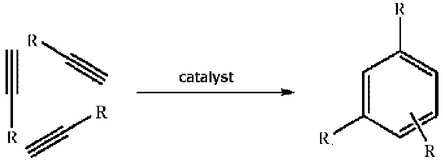

Further, when a carbon-nitrogen triple bond (a cyano group) is used instead of the carbon-carbon triple bond in the above formula, a corresponding heterocyclic skeleton such as a pyridine ring is formed.

The components contained in the inventive curable silicone composition are described below.

### Component (A)

The component (A) is an organopolysiloxane having one or more alkynyl groups or nitrile groups in one molecule.

The alkynyl group is preferably a monovalent hydrocarbon group having a carbon-carbon triple bond and 2 to 8 carbon atoms, more preferably 2 to 6 carbon atoms. Examples include terminal alkynes such as an ethynyl group and a propargyl group, and internal alkynes having a group other than a hydrogen atom on a carbon atom that forms the carbon-carbon triple bond. A terminal alkyne is preferable, and an ethynyl group is particularly preferable. The nitrile group is preferably a monovalent functional group having a carbon-nitrogen triple bond and 1 to 8 carbon atoms, more preferably 1 to 6 carbon atoms. Examples include a cyano group, a cyanomethyl group, and a cyanoethyl group, etc., and it is preferably a cyano group.

The alkynyl group or the nitrile group may be bonded to a silicon atom at the end of the molecular chain, to a silicon atom in the middle of the molecular chain, or both.

The organic group other than the alkynyl group or the nitrile group bonded to the silicon atom of the organopolysiloxane is an unsubstituted or substituted monovalent hydrocarbon group having 1 to 18 carbon atoms, preferably 1 to 10 carbon atoms, and more preferably 1 to 8 carbon atoms. Examples include alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups such as a phenyl group, a tolyl group, a xylyl group, and a naphthyl group; aralkyl groups such as a benzyl group, a phenylethyl group, and a phenylpropyl group; and groups in which some or all of the hydrogen atoms of these groups have been substituted with halogen atoms such as fluorine, bromine, and chlorine, which include a chloromethyl group, a chloropropyl group, a bromoethyl group, a trifluoropropyl group, etc. A methyl group and a trifluoropropyl group are particularly preferable.

The organopolysiloxane has a kinetic viscosity at 25°C of 1 to 20,000,000 mm²/s, preferably 10 to 1,000,000 mm²/s, and more preferably 60 to 30,000 mm²/s. When the kinetic viscosity is 1 mm²/s or more, the curable silicone composition has good physical properties. When it is 20,000,000 mm²/s or less, the curable silicone composition has sufficient spreadability.

In the present invention, the kinematic viscosity is a value measured at 25°C using an Ubbelohde-type Ostwald viscometer (The same shall apply hereafter.).

The organopolysiloxane is not particularly limited in its molecular structure as long as it has the above-mentioned properties, and examples of the structure include a linear structure, a branched structure, a partially branched structure, and a linear structure having a cyclic structure. In particular, it is preferable that the main chain is made of a repeat of diorganosiloxane units and that both ends of the molecular chain have a linear structure in which both ends of the molecular chain are blocked with a triorganosiloxy group. The organopolysiloxane having the linear structure may partially have a branched structure or a cyclic structure.

One kind of the organopolysiloxanes may be used alone or two or more kinds may be used in combination.

### Component (B)

The Component (B) is a transition metal compound, a typical metal compound, or a combination thereof that is capable of catalyzing the [2+2+2] cycloaddition reaction (e.g., Non-Patent Document 1), and is blended as a catalyst for curing the inventive curable silicone composition. Here, "capable of catalyzing the [2+2+2] cycloaddition reaction" means having catalytic activity for the [2+2+2] cycloaddition reaction.

Examples of the transition metal compounds having the catalytic activity for the [2+2+2] cycloaddition reaction include the following.

The transition metal compound may be composed of a central metal atom, a ligand, and a counter ion. Examples of the central metal atom can include Group 4 to Group 12 metal atoms. Specific examples of the central metal atoms can include group 4 metals (titanium (Ti), zirconium (Zr), hafnium (Hf)), group 5 metals (vanadium (V), niobium (Nb), tantalum (Ta)), group 6 metals (chromium (Cr), molybdenum (Mo), tungsten (W)), group 7 metals (manganese (Mn), rhenium (Re)), group 8 metals (iron (Fe), ruthenium (Ru), osmium (Os)), group 9 metals (cobalt (Co), rhodium (Rh), iridium (Ir)), group 10 metals (nickel (Ni), palladium (Pd), platinum (Pt)), group 11 metals (copper (Cu)), and group 12 metals (zinc (Zn)). The central metal atom may be of one kind or of two or more kinds. When it is of two or more kinds, they may be all the same metal or a combination of different metals.

The ligand is not particularly limited, and examples thereof can include carbonyl (CO); ammonia; water; halide ions such as F⁻, Cl⁻, Br⁻, and I⁻; cyanide ions (CN⁻); phosphines (PR₃) such as triphenylphosphine; olefins such as a cyclopentadienyl (Cp) group, a pentamethylcyclopentadienyl (Cp*) group, a cyclooctadiene (COD) group, a cyclooctatriene (COT) group, a norbornene group and a norbornadiene group; α,β-unsaturated ketones such as dibenzylideneacetone; acyl groups such as a acetyl group and a benzoyl group; β-diketones such as acetylacetone (acac); β-ketoesters such as ethyl acetoacetate; amines such as alkylamine, alkylenediamine, aniline and pyridine; and alkoxy groups. Among these, carbonyl (CO), a cyclopentadienyl (Cp) group, triphenylphosphine, and dibenzylideneacetone are preferable.

The ligand may be a monodentate ligand or a polydentate ligand, which is bidentate or higher.

The counter ion is not particularly limited, and examples thereof include halide ions; cyanide ions; carbonate; anions such as PF₆⁻, BF₄⁻, NO₃⁻, BPh₄⁻, ClO₄⁻; and onium cations such as ammonium, sulfonium, and phosphonium, which can also serve as a ligand. Among these, halide ions are preferable, and Cl⁻ is more preferable.

When the transition metal compound is represented by MQₙ, M is Ti, Nb, Ta, Fe, Ru, Co, Rh, Ir, Ni, Pd, etc., Ti, Nb, Ta, Co, Rh, or Pd is preferable, and Co, Rh, or Pd is more preferable. Q represents a cyclopentadienyl group, a halogen atom, an OAc group (Ac represents an acetyl group), an acetylacetonate group, or an alkoxy group. Examples of the halogen atom include I, Br, Cl, and F, and I, Br, and Cl are preferable. "n" is a number corresponding to the valence of M. In MQn, two or more different kinds of Q may be included.

The transition metal complex preferably contains a complex of a transition metal salt represented by MQₙ or a hydrate thereof and a ligand L, and a complex represented by MQₙ-Lₘ is also preferable. MQₙ is as described above. The ligand L includes 2-(2,6-diisopropylphenyl)iminomethylpyridine (dipimp), triphenylphosphine (PPh₃), 1,2-bis(diphenylphosphino)ethane (dppe), 2,6-bis(2,6-diisopropylphenyliminomethyl)pyridine, cyclooctadienyl (cod), or the like. "m" is an integer. The transition metal complex may be a mononuclear complex or a polynuclear complex.

More specifically, examples of the transition metal salts include Ti(O-i-Pr)₄, CpTi(O-i-Pr)₃, CpTiCl₃, NbCl₅, TaCl₅, FeCl₂, FeCl₃, FeBr₂, FeBr₃, FeI₂, FeI₃, Fe(OAc)₂, Fe(OAc)₃, Fe(acac)₂, Fe(acac)₃, CoCl₂, CoCl₃, CoBr₂, CoBr₃, CoI₂, CoI₃, Co(OAc)₂, Co(OAc)₃, Co(acac)₂, Co(acac)₃, RhCl₃, RuCl₃, IrCl₃, etc. i-Pr represents an isopropyl group, and acac represents an acetylacetonate group.

It is also possible to use a catalyst obtained by reacting a transition metal salt selected from the above or a hydrate thereof, or a complex (e.g., a complex with the ligand L above) of these transition metal salt or hydrate thereof, with a reducing agent (e.g., a reducing agent such as metals, organometals, metal hydrides, and alkylamines, which will be described later).

As the transition metal salt, a salt represented by CoQ^{a}₂ (Q^{a} represents a cyclopentadienyl group, a halogen atom, an OAc group, or an acetylacetonate group) is also preferable. It is also possible to use a catalyst obtained by reacting a transition metal salt represented by CoQ^{a}₂ or a hydrate thereof, or a complex (e.g., the complex with the ligand L above) of the transition metal salt represented by CoQ^{a}₂ or the hydrate thereof with a reducing agent (e.g., the reducing agent such as metals, organometals, metal hydrides, alkylamines, which will be described later).

Examples of the reducing agent includes metals (e.g., Zn, Mn, Al, Mg, etc.), organometals (e.g., Grignard reagents, organolithium, etc.), metal hydrides (e.g., NaBH₄, LiAlH₄, etc.), alkylamines (e.g., trialkylamines such as triethylamine), etc. Metals such as Zn, Mn, Al, Mg, etc. are preferably in powder form.

Examples of such a transition metal complex include [Mo(CO)₃Cp]₂, [W(CO)₃Cp]₂, Co₂(CO)₈, NbCl₅, TaCl₅, cyclopentadienyl cobalt(I) dicarbonyl (CpCo(CO)₂), tetrakis(triphenylphosphine)palladium(0), tris(dibenzylideneacetone)dipalladium(0), tris(triphenylphosphine)rhodium(I) chloride, and Pd(Ph₃P)₂Cl₂-CuI. When CpCo(CO)₂ is used, it can be activated by UV irradiation.

The transition metal complex may be used after being diluted, for example, by dissolving or dispersing it in a solvent, as necessary. Publicly known solvents can be used for such a solvent, and examples thereof include alcohols such as methanol; ketones such as acetone; hydrocarbon solvents such as hexane, toluene, and xylene; halogenated hydrocarbon solvents such as methylene chloride, chloroform, and 1,2-dichloroethane; esters such as ethyl acetate; and polysiloxanes such as dimethylpolysiloxane with both ends blocked with a trimethylsilyl group and having a kinetic viscosity at 25°C of 50,000 mm²/s.

Examples of the typical metal compounds that have catalytic activity for the [2+2+2] cycloaddition reaction include the following.

The typical metal compounds can be composed of a central metal atom, a ligand, and a counter ion. The central metal atom can include metals of group 13 to group 14. Specific examples thereof can include group 13 metals (aluminum (Al), gallium (Ga), indium (In), thallium (Tl)) and group 14 metals (tin (Sn), lead (Pb)). Specifically, they include an organometallic compound of the above metals such as an organoaluminum including triethylaluminum and an organotin including Ph₄Sn, etc.

As with the transition metal complex, the typical metal compounds may also be used after being diluted by dissolving or dispersing it in a solvent, if necessary. As such a solvent, the solvents described for the transition metal complex can be used.

Concentration (catalyst concentration) of the transition metal complex or the typical metal compound in the solvent can be set as necessary, for example, to 0.01 to 10% by mass, preferably 0.1 to 5% by mass, in terms of the mass of the central metal. The desired composition can be prepared by adding the diluent so as to have the blending amount of the component (B) described below.

For the component (B), it is possible to use the above-mentioned publicly known conventional catalysts (for example, disclosed in Patent Documents 5 and 6 and Non-Patent Document 1) that is used in the [2+2+2] cycloaddition reaction. Specific examples include transition metal-based compounds such as cobalt-based, palladium-based, rhodium-based, ruthenium-based, iron-based, titanium-based, zirconium/nickel-based, zirconium/copper-based, and tantalum-based; and typical metal compounds such as silicon-based and germanium-based. However, it is preferably the transition metal compound, more preferably the transition metal complex, which is capable of catalyzing a [2+2+2] cycloaddition reaction. Among these, transition metal complexes that are cobalt-based, palladium-based, rhodium-based, and ruthenium-based catalysts (transition metal complex) is preferable, which are relatively easy to obtain. One kind of the component (B) may be used alone or two or more kinds thereof may be used in combination. It may be any combination of a transition metal compound and a typical metal compound. Examples thereof can include NbCl₅-Ph₄Sn and TaCl₅-Ph₄Sn. Here, "based" means "contains"; for example, "cobalt-based" means containing cobalt, and "transition metal-based compound" means a compound containing a transition metal.

As the component (B) that is a catalyst active for the [2+2+2] cycloaddition reaction, cyclopentadienylcobalt(I) dicarbonyl, tetrakis(triphenylphosphine)palladium(0), tris(dibenzylideneacetone)dipalladium(0), and tris(triphenylphosphine)rhodium(I) chloride are particularly preferable.

The transition metal compound may be obtained by reacting a transition metal salt or a hydrate thereof, or a complex of the transition metal salt or the hydrate thereof, with a reducing agent. In this way, it is possible to reduce the transition metal and produce a catalytically active species.

Known reactions of alkynyl groups include, for example, synthesis of substituted polyacetylenes by a catalyst as disclosed in Patent Document 4, and cyclotrimerization of alkynyl groups to form benzene skeletons. In relation to the latter, a polymerization reaction using a cycloaddition-trimerization reaction of alkynes ([2+2+2] cycloaddition reaction) as a bond-forming reaction is expected to be a useful polymer synthesis method for producing branched polymers (hyperbranched polymers) (Patent Documents 5 and 6). Furthermore, it is known that a heterocyclic ring such as a pyridine ring can be formed by the catalytic [2+2+2] cycloaddition reaction of an alkynyl group with a carbon-nitrogen triple bond (a cyano group) or an isocyanate group (Non-Patent Document 1). Thus, it is known that the [2+2+2] cycloaddition reaction can be applied to specific ring formation and branched polymer synthesis, but its application to curing reactions has not been studied so far.

The present invention combines an organopolysiloxane having one or more alkynyl groups or nitrile groups in one molecule with a catalyst active in the [2+2+2] cycloaddition reaction. This is based on the fact that the present inventor first discovered that a silicone composition can be cured by a reaction mechanism called [2+2+2] cycloaddition, which is completely different from the conventional curing reaction (addition curing by hydrosilylation). Because the present invention employs a curing reaction by [2+2+2] cycloaddition, the curing reaction proceeds even in the presence of a substance that causes curing inhibition of the addition-curable silicone composition; a reaction-control agent is not required; and special temperature control is not required during storage or transportation, which are excellent features not found in conventional curing forms.

The curing reaction in the present invention proceeds while an organopolysiloxane having an alkynyl group or a nitrile group undergoes a [2+2+2] cycloaddition reaction catalytically. As described above, for example, by the [2+2+2] cycloaddition, a carbon-carbon triple bond can be trimerized to form a benzene skeleton or a carbon-carbon triple bond can be cyclized together with a carbon-nitrogen triple bond (a CN group) to form a heterocyclic ring such as a pyridine ring, and these cyclic skeletons formed in the curing reaction have a planar and chemically stable structure. For this reason, the cured product obtained in the present invention is considered to be excellent in electrical properties, cold resistance, heat resistance, and chemical stability.

The blending amount of component (B) may be an effective amount as a catalyst, that is, an effective amount required to accelerate the curing reaction and cure the inventive curable silicone composition. The amount is preferably 0.1 to 10,000 ppm, more preferably 1 to 5,000 ppm, and further preferably 10 to 3,000 ppm, relative to the entire composition in terms of mass of the central metal atom. When the amount of catalyst is equal to or greater than the lower limit, the catalytic effect is obtained. When the amount is equal to or less than the upper limit, the catalytic effect is sufficient and economical.

### Component (C)

The inventive curable silicone composition can further contain an inorganic or organic filler as the component (C). The component (C) is intended to impart various properties such as thermal conductivity, heat resistance, reinforcing properties, electrical conductivity, and design properties to the inventive curable silicone composition, and is preferably a filler containing one or more materials selected from the group consisting of metals, metal oxides, metal hydroxides, metal nitrides, metal carbides, carbon allotropes, resins, dyes, and pigments. Examples of the material include metals such as aluminum, silver, copper, and metallic silicon; metal oxides such as alumina, zinc oxide, magnesium oxide, silicon dioxide, cerium oxide, and iron oxide; metal hydroxides such as aluminum hydroxide and cerium hydroxide; metal nitrides such as aluminum nitride and boron nitride; metal carbides such as silicon carbide; carbon allotropes such as diamond, graphite, carbon nanotubes, and graphene; resins such as silicone resin powder; dyes such as indigo; pigments such as red iron oxide; etc. In order to impart thermal conductivity to the composition, it is preferable to use aluminum, silver, alumina, zinc oxide, or aluminum nitride; in order to impart heat resistance, it is preferable to use cerium oxide, cerium hydroxide, or iron oxide; in order to impart reinforcement, it is preferable to use silicon dioxide such as hydrophobic fumed silica; in order to impart electrical conductivity, it is preferable to use silver, copper, or a carbon allotrope; in order to impart smoothness, it is preferable to use a silicone resin powder; and in order to impart design properties, it is preferable to use a dye or pigment such as indigo, red iron oxide, etc.

Because the composition obtained is more uniform when the average particle size of the filler is smaller than 500 µm, it is preferably in the range of 500 µm or less, more preferably in the range of 100 µm or less, and further preferably in the range of 40 µm or less. It is also preferably 0.01 µm or more, particularly 0.1 µm or more. The average particle size can be determined, for example, as the volume average value (or median size) in particle size distribution measurement by laser light diffraction method. The shape of the filler may be spherical, irregular, needle-like, platelike, etc., which is not particularly limited.

When the blending amount of the component (C) is 5,000 parts by mass or less relative to 100 parts by mass of the component (A), the composition (C) has not too high viscosity and enables easy handling, so that it gets homogeneous. Therefore, the amount may be in the range of 5,000 parts by mass or less, and preferably 2,000 parts by mass or less. When the component (C) is blended, the amount is preferably 0.1 part by mass or more, and particularly preferably 1 part by mass or more.

### Other component

The inventive curable silicone composition may contain a non-reactive organo(poly)siloxane such as methylpolysiloxane to adjust the strength and viscosity of the composition. For the purpose of improving the filling property of the filler or imparting adhesiveness to the composition, a hydrolyzable organopolysiloxane, various modified silicones, or a hydrolyzable organosilane may be blended. Further, a solvent for adjusting the viscosity of the composition may be blended. Furthermore, in order to prevent deterioration of the curable silicone composition, a publicly known conventional antioxidant such as 2,6-di-tert-butyl-4-methylphenol may be included as necessary. Furthermore, it is possible to blend a flame retardant, a sedimentation inhibitor, or a thixotropy improver as necessary.

### Method for manufacturing a curable silicone composition

The inventive method for manufacturing the curable silicone composition will be described. The method for manufacturing the inventive curable silicone composition of the present invention is not particularly limited, but it is characterized by mixing (A) 100 parts by mass of an organopolysiloxane having one or more alkynyl groups or nitrile groups in one molecule, and (B) an effective amount of a transition metal compound, a typical metal compound, or a combination thereof capable of catalyzing a [2+2+2] cycloaddition reaction. That is, the method for manufacturing the curable silicone composition includes a step of mixing the components (A) and (B) above and besides these as necessary also the component (C) and other components.

Examples of mixing methods of the components (A) and (B) above, as necessary with the component (C) and other components, includes a method using a mixer such as Awatori Rentaro (registered trademark of Thinky Corporation), TRI-MIX, TWINMIX, or PLANETARY MIXER (all registered trademarks of mixers manufactured by Inoue Mfg., Inc.), ULTRA MIXER (registered trademarks of mixers manufactured by Mizuho Industrial Co., Ltd.), and HIVIS DISPER MIX (registered trademarks of mixers manufactured by Tokushu Kika Kogyo Co., Ltd.); and a method by hand mixing with using a spatula or the like. The mixing may be performed at 25°C, usually for 3 minutes to 24 hours, preferably for 5 minutes to 12 hours, and particularly preferably 10 minutes to 6 hours. Deaeration may be performed during the mixing.

The inventive curable silicone composition has preferably an absolute viscosity measured at 25°C of 0.1 to 1,000 Pa·s, more preferably 1 to 700 Pa·s, and further preferably 5 to 500 Pa·s. When the viscosity is 0.1 Pa·s or more, workability is improved due to good shape retention, etc. When the viscosity is 1,000 Pa·s or less, workability is improved due to easy discharge and coating of the composition, etc. The above viscosity can be achieved by adjusting the blending of the above-mentioned components. In the present invention, the absolute viscosity is a value measured at 25°C using a Malcolm viscometer (rotor A at 10 rpm, at a shear rate of 6 [1/s]).

The inventive curable silicone composition can be suitably used in a wide range of applications, as with conventional general curable silicone compositions, and the composition is particularly effective for applications that do not require special temperature control during storage or transportation, and for applications for a part where there is a substance that causes curing inhibition of publicly known conventional addition-curable silicone compositions.

### [silicone cured Product]

The inventive silicone cured product is obtained by curing the curable silicone composition above.

The method for manufacturing this silicone cured product is characterized by including a step of mixing (A) 100 parts by mass of an organopolysiloxane having one or more alkynyl groups or nitrile groups in one molecule, and (B) an effective amount of a transition metal compound, a typical metal compound, or a combination thereof that is capable of catalyzing a [2+2+2] cycloaddition reaction, and a step of curing the obtained mixture.

Further, the method for curing the curable silicone composition above is characterized by curing a mixture containing (A) an organopolysiloxane having one or more alkynyl groups or nitrile groups in one molecule, and (B) an effective amount of a transition metal compound, a typical metal compound, or a combination thereof that is capable of catalyzing a [2+2+2] cycloaddition reaction.

The curing conditions for curing the inventive curable silicone composition are not particularly limited. However, the temperature may be usually 25 to 200°C, preferably 60 to 180°C, and particularly preferably 80 to 170°C. The time may be usually 3 minutes to 24 hours, preferably 5 minutes to 12 hours, and particularly preferably 10 minutes to 6 hours. The properties of the curable silicone composition after curing are not particularly limited, and examples include gel-like, low-hardness rubber-like, high-hardness rubber-like, etc.

### [[2+2+2] Cycloaddition Reaction Product]

The present invention provides a [2+2+2] cycloaddition reaction product of an organopolysiloxane having one or more alkynyl groups or nitrile groups in one molecule.

The method for manufacturing the [2+2+2] cycloaddition reaction product above is characterized in that the product is obtained by performing a [2+2+2] cycloaddition reaction of the component (A) an organopolysiloxane having one or more alkynyl groups or nitrile groups in one molecule with the component (B) a transition metal compound, a typical metal compound, or a combination thereof that is capable of catalyzing a [2+2+2] cycloaddition reaction.

The structure of the [2+2+2] cycloaddition reaction product (silicone cured product) can be confirmed by known measurement means such as nuclear magnetic resonance spectroscopy, infrared spectroscopy, gel permeation chromatography, etc.

### EXAMPLE

Hereinafter, the present invention will be described in detail with reference to Examples and Comparative Examples. However, the present invention is not limited thereto.

In the following, the kinetic viscosity at 25°C is the value measured as described above, the catalyst concentration is based on the mass of the entire composition in terms of mass of the central metal atom, and the average particle size is the volume-based average value measured by particle size distribution measurement according to a laser diffraction method. The structure of the obtained silicone cured product was confirmed by nuclear magnetic resonance spectroscopy, infrared spectroscopy, and gel permeation chromatography.

First, the following components each were made ready for preparation of the inventive curable silicone composition.

### Component (A)

A-1: Dimethylpolysiloxane with both ends blocked with an ethynyl group and having a kinetic viscosity at 25°C of 600 mm²/s
A-2: Dimethylpolysiloxane with both ends blocked with an ethynyl group and having a kinetic viscosity at 25°C of 900 mm²/s
A-3: M^{E}₅T₁₀ (kinetic viscosity at 25°C of 15 mm²/s) (M^{E} represents HC≡CMe₂SiO_{1/2}, T represents MeSiO_{3/2})
A-4: Organopolysiloxane represented by the following formula (1) and having a kinetic viscosity at 25°C of 500 mm²/s 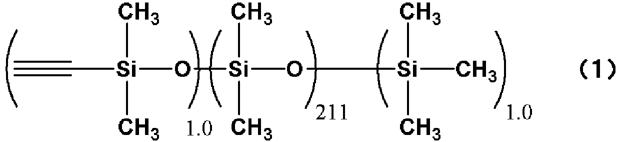
A-5 (for comparison): Dimethylpolysiloxane with both ends blocked with a vinyl group and having a kinetic viscosity at 25°C of 600 mm²/s

### Component (B)

B-1: Cyclopentadienyl cobalt (I) dicarbonyl
B-2: Solution of tetrakis (triphenylphosphine) palladium (0) dissolved in methylene chloride (catalyst concentration: 1 mass%)
B-3: Solution of tris (dibenzylideneacetone) dipalladium (0) dissolved in methylene chloride (catalyst concentration: 1 mass%)
B-4: Solution of tris (triphenylphosphine) rhodium (I) chloride dissolved in methylene chloride (catalyst concentration: 1 mass%)
B-5: Solution of tris (dibenzylideneacetone) dipalladium (0), dissolved in dimethylpolysiloxane with both ends blocked with a trimethylsilyl group and having a kinetic viscosity at 25°C of 50,000 mm²/s (catalyst concentration: 5 mass%)
B-6 (for comparison): Solution of a platinum-divinyltetramethyldisiloxane complex dissolved in the same dimethylpolysiloxane as A-5 above (platinum atom content: 1 mass)

### Component (C)

C-1: Aluminum powder having an average particle size of 8 µm
C-2: Zinc oxide powder having an average particle size of 0.4 µm

### Other component

D-1: Hydrolyzable organosilane represented by the following formula (2)

   **C₁₀H₂₁-Si(OCH₃)₃** **(2)**
D-2 (for comparison): 1-ethynyl-1-cyclohexanol represented by the following formula (3) 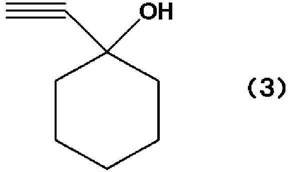
D-3 (for comparison): Methylhydrogendimethylpolysiloxane represented by the following formula (4) (Kinematic viscosity at 25°C of 100 mm²/s) 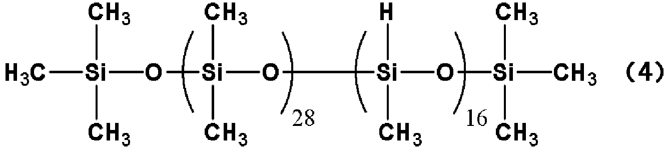
D-4 (for comparison): Methylhydrogendimethylpolysiloxane represented by the following formula (5) (Kinematic viscosity at 25°C of 28 mm²/s) 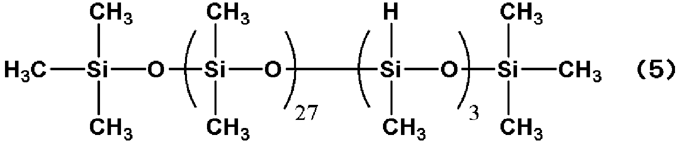
D-5 (for comparison): Methylhydrogendimethylpolysiloxane represented by the following formula (6) (Kinematic viscosity at 25°C of 17 mm²/s)

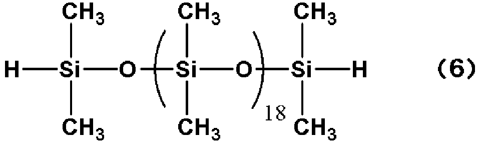

### [Examples 1 to 4]

### Preparation of curable silicone composition [1]

The above components (A) and (B) were mixed by hand with a spatula in the blending amounts shown in Table 1 below to prepare curable silicone compositions. The obtained curable silicone compositions were heated at 150°C for 1.5 hours for curing, and then, the properties of each of them were confirmed. The results are shown in Table 1.

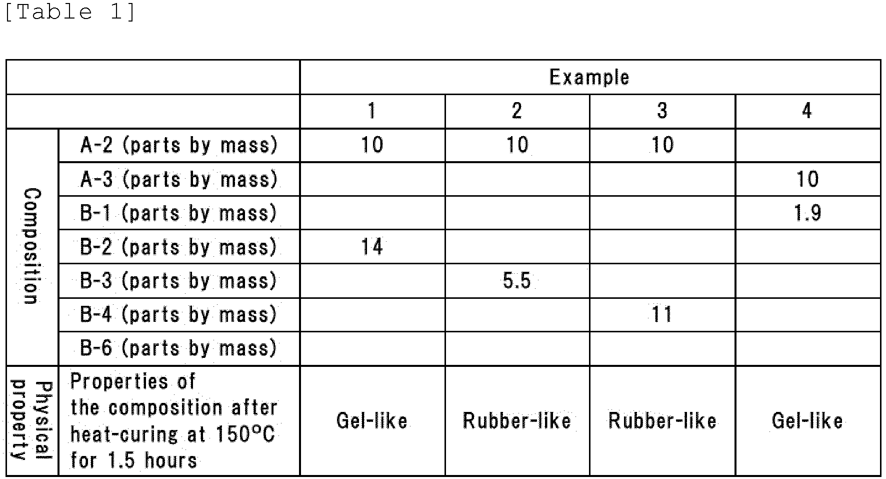

The results in Table 1 show that the curable silicone compositions of Examples 1 to 4, which satisfy the requirements of the present invention, can be cured into states ranging from gel-like to rubber-like by heating. Furthermore, it was confirmed that the obtained silicone cured product was a [2+2+2] cycloaddition reaction product, by nuclear magnetic resonance spectroscopy, infrared spectroscopy, and gel permeation chromatography.

### [Examples 5 to 8, Comparative Examples 1 to 3]

### Preparation of curable silicone composition [2]

The above components (A), (B), (C), and (D) were mixed by Awatori Rentaro (registered trademark of Thinky Corporation), in the blending amounts shown in Tables 2 and 3 below to prepare curable silicone compositions. Each of the obtained curable silicone compositions was cured at 25°C, and the time it took to set was measured. In addition, the compounds were bllended with a predetermined amount of 2-phenylimidazole, represented by the following formula (7), which is a substance that causes curing inhibition of publicly known conventional addition-curable silicone compositions, the resultants were heated at 150°C for 1.5 hours for curing, and then, the properties of the cured compositions were confirmed. The results are shown in Tables 2 and 3.

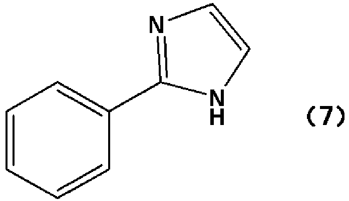

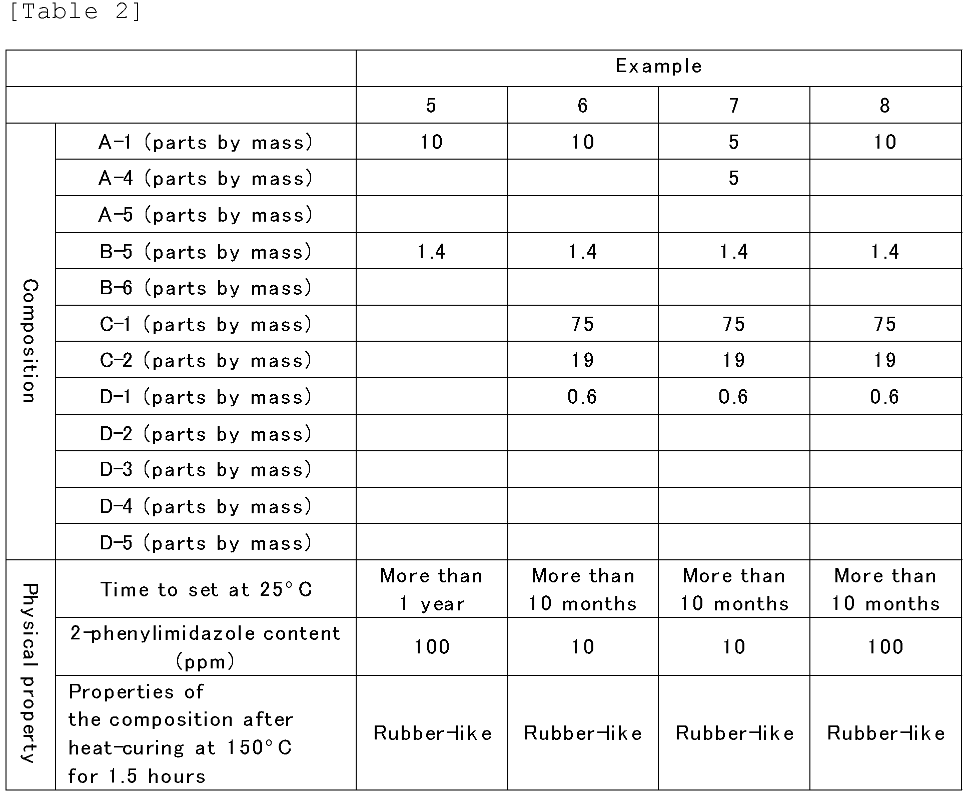

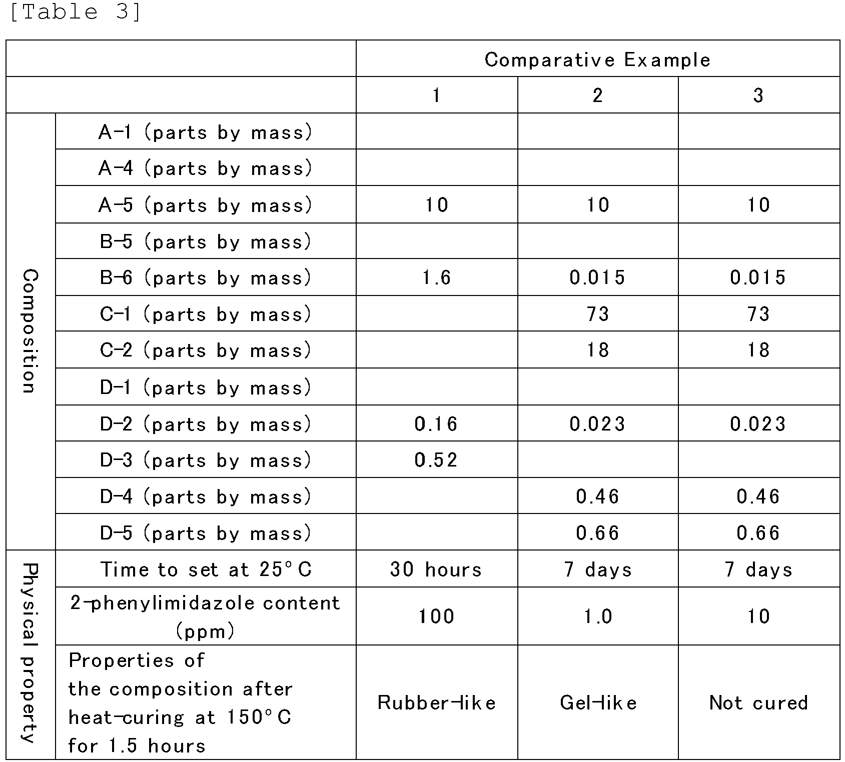

The results in Tables 2 and 3 show that the silicone compositions of Examples 5 to 8, which satisfy the requirements of the present invention, take a very long time to set at 25°C, and can be cured to a rubber-like state by heating, even when containing 10 to 100 ppm of 2-phenylimidazole that causes curing inhibition of publicly known conventional addition-curable silicone compositions. Further, the obtained silicone cured products were confirmed to be [2+2+2] cycloaddition reaction products by nuclear magnetic resonance spectroscopy, infrared spectroscopy, and gel permeation chromatography.

On the other hand, in Comparative Examples 1 to 3, compositions are publicly known conventional addition-curable silicone compositions. In Comparative Example 1, the composition can be cured into a rubber-like state by heating even when 100 ppm of 2-phenylimidazole is blended, but the time until setting at 25°C is extremely short at 30 hours. Comparative Examples 2 and 3 shows that the time until setting at 25°C is extended to 7 days, but is still very short compared to Examples 5 to 8. In addition, the properties of the composition when cured by heating was gel-like when 1.0 ppm of 2-phenylimidazole was blended, and not cured when 10 ppm was blended, which leads to judge that the curability was also reduced.

The results in Tables 1 to 3 show that the inventive curable silicone composition (Examples 1 to 8) takes a sufficiently long time to set at room temperature (25°C), and can be sufficiently cured by heating even in the presence of a substance that causes curing inhibition of conventional addition-curable silicone compositions. This is based on the feature of the present invention that the curable silicone composition cures by a [2+2+2] cycloaddition reaction (in other words, the obtained silicone cured product is a [2+2+2] cycloaddition reaction product.).

Therefore, the inventive curable silicone composition has characteristics that it can be stored and transported at room temperature and is less susceptible to substances that cause curing inhibition in publicly known conventional addition-curable silicone compositions. As a result, it made possible to reduce the environmental load by not requiring special temperature control during storage or transport, and also to be applied also to a part where substances that cause curing inhibition of publicly known conventional addition-curable silicone compositions are present.

Further, the inventive [2+2+2] cycloaddition reaction product can be easily and efficiently obtained by catalytic cycloaddition reaction of an organopolysiloxane having one or more alkynyl groups or nitrile groups in one molecule. In addition, the reaction has the advantages of not requiring a reaction-control agent and being less susceptible to the coexistence of substances that cause curing inhibition of ordinary hydrosilylation reactions, so that the inventive composition is excellent as a main component of a curable silicone composition.

The present description includes the following embodiments.
[1]: A curable silicone composition comprising:
   (A) 100 parts by mass of an organopolysiloxane having one or more alkynyl groups or nitrile groups in one molecule; and
   (B) an effective amount of a transition metal compound, a typical metal compound, or a combination thereof that is capable of catalyzing a [2+2+2] cycloaddition reaction.
[2]: The curable silicone composition according to the above [1], wherein the component (A) is an organopolysiloxane having a kinematic viscosity at 25°C of 1 to 20,000,000 mm²/s.
[3]: The curable silicone composition according to the above [1] or [2], wherein the component (A) is an organopolysiloxane having one or more alkynyl groups in one molecule.
[4]: The curable silicone composition according to any one of the above [1] to [3], wherein the component (A) is an organopolysiloxane having one or more ethynyl groups in one molecule.
[5]: The curable silicone composition according to any one of the above [1] to [4], wherein the component (B) is a transition metal complex capable of catalyzing a [2+2+2] cycloaddition reaction.
[6]: The curable silicone composition according to any one of the above [1] to [5], further comprising 0.1 to 5,000 parts by mass of (C) one or more inorganic or organic fillers relative to 100 parts by mass of the component (A).
[7]: The curable silicone composition according to the above [6], wherein the component (C) is a filler comprising one or more materials selected from the group consisting of metals, metal oxides, metal hydroxides, metal nitrides, metal carbides, carbon allotropes, resins, dyes, and pigments.
[8]: A silicone cured product of the curable silicone composition according to any one of the above [1] to [7].
[9]: A method for manufacturing a curable silicone composition comprising a step of mixing
   (A) 100 parts by mass of an organopolysiloxane having one or more alkynyl groups or nitrile groups in one molecule; and
   (B) an effective amount of a transition metal compound, a typical metal compound, or a combination thereof that is capable of catalyzing a [2+2+2] cycloaddition reaction.
[10]: A method for manufacturing a silicone cured product comprising a step of mixing
   (A) 100 parts by mass of an organopolysiloxane having one or more alkynyl groups or nitrile groups in one molecule; and
   (B) an effective amount of a transition metal compound, a typical metal compound, or a combination thereof that is capable of catalyzing a [2+2+2] cycloaddition reaction,
   and a step of curing an obtained mixture.
[11]: A method for curing a curable silicone composition comprising a step of curing a mixture of
   (A) an organopolysiloxane having one or more alkynyl groups or nitrile groups in one molecule; and
   (B) an effective amount of a transition metal compound, a typical metal compound, or a combination thereof that is capable of catalyzing a [2+2+2] cycloaddition reaction.
[12]: A [2+2+2] cycloaddition reaction product of an organopolysiloxane having one or more alkynyl groups or nitrile groups in one molecule.
[13]: A method for manufacturing a [2+2+2] cycloaddition reaction product comprising:
   a step of performing a [2+2+2] cycloaddition reaction of the component (A) an organopolysiloxane having one or more alkynyl groups or nitrile groups in one molecule with the component (B) a transition metal compound, a typical metal compound, or a combination thereof that is capable of catalyzing a [2+2+2] cycloaddition reaction; and
   a step of obtaining a reaction product.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A curable silicone composition comprising:
(A) 100 parts by mass of an organopolysiloxane having one or more alkynyl groups or nitrile groups in one molecule; and
(B) an effective amount of a transition metal compound, a typical metal compound, or a combination thereof that is capable of catalyzing a [2+2+2] cycloaddition reaction.

2. The curable silicone composition according to claim 1, wherein the component (A) is an organopolysiloxane having a kinematic viscosity at 25°C of 1 to 20,000,000 mm²/s.

3. The curable silicone composition according to claim 2, wherein the component (A) is an organopolysiloxane having one or more alkynyl groups in one molecule.

4. The curable silicone composition according to claim 3, wherein the component (A) is an organopolysiloxane having one or more ethynyl groups in one molecule.

5. The curable silicone composition according to claim 1, wherein the component (B) is a transition metal complex capable of catalyzing a [2+2+2] cycloaddition reaction.

6. The curable silicone composition according to any one of claims 1 to 5, further comprising 0.1 to 5,000 parts by mass of (C) one or more inorganic or organic fillers relative to 100 parts by mass of the component (A) .

7. The curable silicone composition according to claim 6, wherein the component (C) is a filler comprising one or more materials selected from the group consisting of metals, metal oxides, metal hydroxides, metal nitrides, metal carbides, carbon allotropes, resins, dyes, and pigments.

8. A silicone cured product of the curable silicone composition according to any one of claims 1 to 5.

9. A silicone cured product of the curable silicone composition according to claim 6 or 7.

10. A method for manufacturing a curable silicone composition comprising a step of mixing
(A) 100 parts by mass of an organopolysiloxane having one or more alkynyl groups or nitrile groups in one molecule; and
(B) an effective amount of a transition metal compound, a typical metal compound, or a combination thereof that is capable of catalyzing a [2+2+2] cycloaddition reaction.

11. A method for manufacturing a silicone cured product comprising a step of mixing
(A) 100 parts by mass of an organopolysiloxane having one or more alkynyl groups or nitrile groups in one molecule; and
(B) an effective amount of a transition metal compound, a typical metal compound, or a combination thereof that is capable of catalyzing a [2+2+2] cycloaddition reaction,
and a step of curing an obtained mixture.

12. A method for curing a curable silicone composition comprising a step of curing a mixture of
(A) an organopolysiloxane having one or more alkynyl groups or nitrile groups in one molecule; and
(B) an effective amount of a transition metal compound, a typical metal compound, or a combination thereof that is capable of catalyzing a [2+2+2] cycloaddition reaction.

13. A [2+2+2] cycloaddition reaction product of an organopolysiloxane having one or more alkynyl groups or nitrile groups in one molecule.

14. A method for manufacturing a [2+2+2] cycloaddition reaction product comprising:
a step of performing a [2+2+2] cycloaddition reaction of the component (A) an organopolysiloxane having one or more alkynyl groups or nitrile groups in one molecule with the component (B) a transition metal compound, a typical metal compound, or a combination thereof that is capable of catalyzing a [2+2+2] cycloaddition reaction; and
a step of obtaining a reaction product.
